# EUROPEAN PATENT APPLICATION

(11) **EP 4 578 608 A1**
(43) Date of publication of application: **02.07.2025**
(21) Application number: 23857132.7
(22) Date of filing: 01.08.2023
(51) Int. Cl.: B25J 15/06

(54) **GRIPPER AND WORKPIECE HOLDING METHOD**

(30) Priority: 24.08.2022 JP 2022132972
(71) Applicant: Amada Co., Ltd., Isehara-shi, Kanagawa 259-1196 (JP)
(72) Inventor: TSURUTA Hiroki, Isehara-shi, Kanagawa 259-1196 (JP)
(74) Representative: Grünecker Patent- und Rechtsanwälte PartG mbB
(86) International application number: PCT/JP2023/028091
(87) International publication number: WO 2024/043017

(57) **Abstract**

A gripper includes: a gripper main body configured to be directly or indirectly attached to a rotating structure provided at a distal end of an arm of a bending robot which is used at least for a bending process for a workpiece; and a suction body configured to be provided at a distal end of the gripper main body and to suck the workpiece, the suction body includes a suction surface configured to be directed in a direction intersecting with a rotation axis of the rotating structure, the suction surface is positioned in a range of a projected area of a rotation center portion of the rotating structure in a direction along the rotation axis of the rotating structure, and the suction body is configured to be rotatable around an axis as a center, the axis being orthogonal to the suction surface.

## Description

### Technical Field

The present invention relates to a gripper and a workpiece holding method.

### Background Art

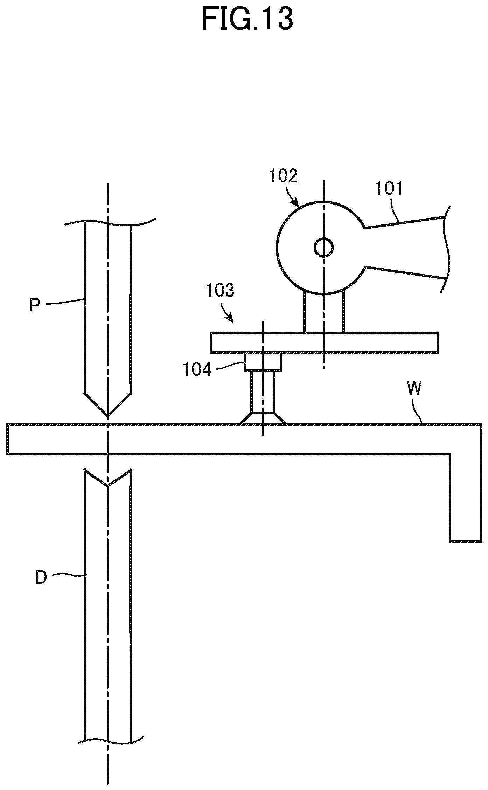

In related art, a bending robot has been known which performs assistance or the like for a bending process for a workpiece. For example, Patent Literature 1 discloses a robot which includes a robot head portion 102 provided at the distal end of an arm 101 and a clamp portion 103 provided in a vertical position to the robot head portion 102, as illustrated in Figure 13. The robot head portion 102 is configured to be capable of rotating the clamp portion 103 respectively in a vertical plane around a horizontal axis and in a horizontal plane around a vertical axis.

The robot disclosed in Patent Literature 1 rotates the clamp portion 103 (the robot head portion) in the horizontal plane in a lower-side approach state where a workpiece W is held by the clamp portion 103 so as to be positioned above the robot head portion 102, for example. Accordingly, a direction of the workpiece W with respect to a press brake can be rotated by 180° in a horizontal direction. Further, the robot is configured to be capable of sliding the workpiece W sucked to a vacuum clamper 105 in the horizontal direction by sliding a stretch member 104 of the clamp portion 103 in the horizontal direction.

Thus, in the robot disclosed in Patent Literature **1,** for example, after one side of the workpiece is bent by the press brake, without performing an orientation change of the robot or re-gripping of the workpiece, one side on an opposite side of the workpiece can be bent in the same direction as the one side which is first bent. This provides an advantage of shortening a processing time of the workpiece.

### Citation List

### Patent Literature

Patent Literature 1: Japanese Patent Application Laid-Open Publication No. 07-323334

### Summary

### Problems to be Solved by the Invention

Incidentally, in a robot disclosed in Patent Literature 1, in a case where one side on an opposite side of a workpiece is desired to be bent in a bending direction reverse to one side which is first bent, as illustrated in Figure 13, a clamp portion 103 is rotated respectively in a vertical plane and a horizontal plane by the robot head portion 102. It is possible that in an upper-side approach state where the robot head portion 102 is positioned above the clamp portion 103, the one side on the opposite side is then inserted between a punch P and a die D, and a bending process for the workpiece W is carried out.

However, because the robot disclosed in Patent Literature 1 has a structure in which the clamp portion 103 sucking the workpiece W is positioned in a vertical position to the robot head portion 102, when in the bending process for the workpiece W in the above upper-side approach state, an arm 101 of the robot is operated obliquely upward and forward in accordance with a motion in the bending process for the workpiece W, the robot head portion 102 might interfere with the punch P of a press brake or the press brake itself.

Thus, in the robot disclosed in Patent Literature 1, it is necessary to perform an operation for re-gripping the workpiece W via an assisting holding device such that the robot head portion 102 is positioned on a lower side of the clamp portion 103. In other robots, there are cases where an operation becomes necessary in which an orientation itself of the robot is changed such that the robot head portion 102 is positioned on the lower side of the clamp portion 103. In both of the cases, there is a problem of a processing time for the workpiece W being needed.

One aspect of the present invention provides a gripper and a workpiece holding method that are capable of further shortening a processing time for a workpiece.

### Means for Solving the Problems

A gripper according to one aspect of the present invention includes: a gripper main body configured to be directly or indirectly attached to a rotating structure provided at a distal end of an arm of a bending robot which is used at least for a bending process for a workpiece; and a suction body configured to be provided at a distal end of the gripper main body and to suck the workpiece, the suction body includes a suction surface configured to be directed in a direction intersecting with a rotation axis of the rotating structure, the suction surface is positioned in a range of a projected area of a rotation center portion of the rotating structure in a direction along the rotation axis of the rotating structure, and the suction body is configured to be rotatable around an axis as a center, the axis being orthogonal to the suction surface.

A workpiece holding method according to one aspect of the present invention includes changing a direction of the workpiece by rotating the workpiece by rotating the suction body of the gripper in a state where the workpiece is held by suction by the above gripper.

In the gripper and the workpiece holding method according to the aspects of the present invention, the suction body configured to be provided at the distal end of the gripper main body includes the suction surface, which is configured to be directed in the direction intersecting with the rotation axis of the rotating structure and configured to be positioned in the range of the projected area of the rotation center portion of the rotating structure in the direction along the rotation axis of the rotating structure, and rotates around the axis as the center, the axis being orthogonal to the suction surface. Accordingly, because it becomes unnecessary to perform an orientation changing operation for a robot in a bending process for the workpiece or a re-gripping operation for the workpiece, a processing time for the workpiece can further be shortened.

### Effect of the Invention

A gripper and a workpiece holding method according to aspects of the present invention can further shorten a processing time for a workpiece.

### Brief Description of Drawings

[Figure 1] Figure 1 is an outline diagram illustrating a workpiece supply robot having a gripper according to one embodiment of the present invention.
[Figure 2] Figure 2 is a side view illustrating the gripper according to the embodiment.
[Figure 3] Figure 3 is a partially transparent side view of the gripper according to the embodiment.
[Figure 4] Figure 4 is an outline diagram illustrating one example of a rotating operation of the gripper according to the embodiment.
[Figure 5] Figure 5 is a front view illustrating a workpiece non-holding state of the gripper according to the embodiment.
[Figure 6] Figure 6 is a front view illustrating a workpiece holding state of the gripper according to the embodiment.
[Figure 7] Figure 7 is an outline diagram illustrating an operation of a bending process by the workpiece supply robot having the gripper according to the embodiment.
[Figure 8] Figure 8 is an outline diagram illustrating the operation of the bending process by the workpiece supply robot having the gripper according to the embodiment.
[Figure 9] Figure 9 is a side view illustrating an operation in the bending process by the gripper according to the embodiment.
[Figure 10] Figure 10 is a side view illustrating the operation in the bending process by the gripper according to the embodiment.
[Figure 11] Figure 11 is a side view illustrating the operation in the bending process by the gripper according to the embodiment.
[Figure 12] Figure 12 is an outline diagram illustrating an operation of the bending process by the workpiece supply robot having the gripper according to the embodiment.
[Figure 13] Figure 13 is an outline diagram illustrating an operation of a bending process by a bending robot in related art.

### Description of Embodiment

A gripper and a workpiece holding method according to an embodiment of the present invention will hereinafter be described in detail with reference to the attached drawings. However, the following embodiment does not limit the invention according to each of the claims, and not all combinations of features described in the embodiment are necessarily required for solutions in the invention. Further, in the following embodiment, arrangement, scales, dimensions, and so forth of each configuration element might be exaggerated or diminished, and descriptions of a part of the configuration elements might not be made.

### [General Configuration of Workpiece Supply Robot Having Gripper]

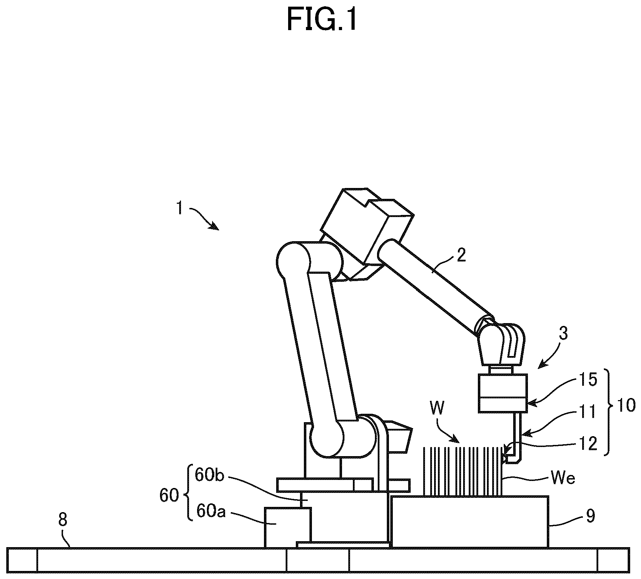

Figure 1 is an outline diagram illustrating a workpiece supply robot having a gripper according to one embodiment of the present invention.

As illustrated in Figure 1, in outline, a workpiece supply robot 1 according to the embodiment is configured to be capable of transporting a workpiece We at an end from a group of workpieces W which are mounted on a workpiece mounting table 9 in a comb-tooth shape. Note that the group of the workpieces W may be mounted on the workpiece mounting table 9 in a so-called flat stacking manner. The workpiece supply robot 1 includes a gripper 10 as a robot hand which holds the workpiece We at an end portion.

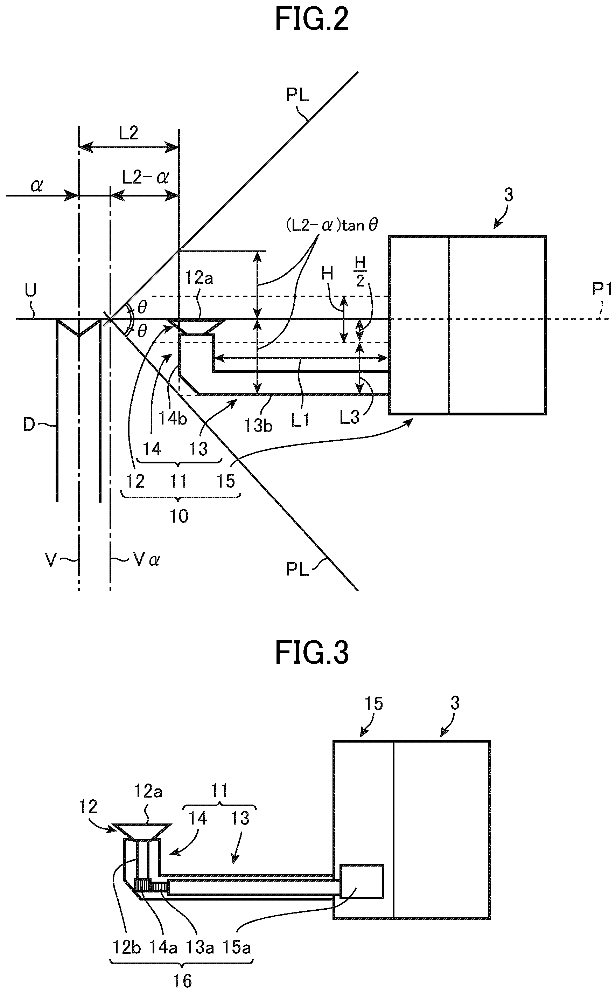

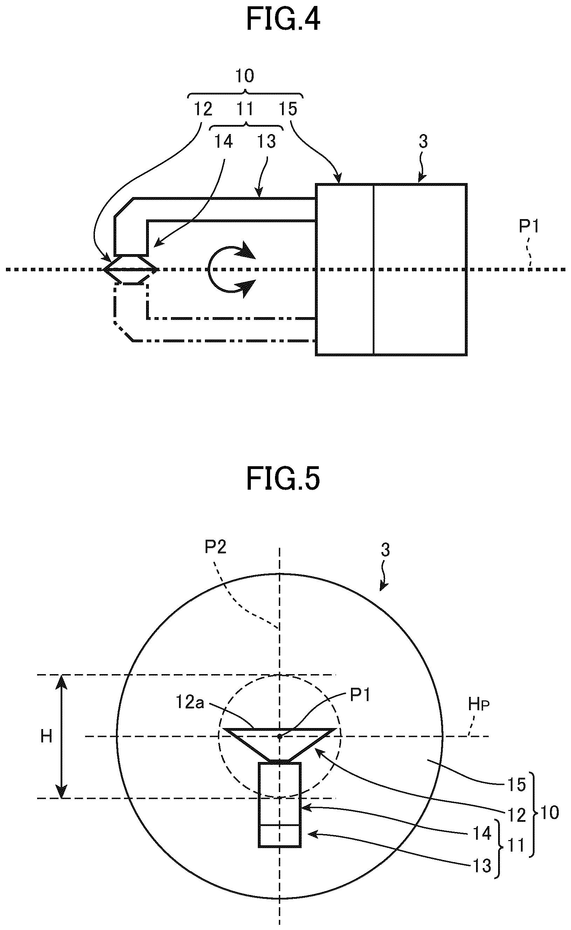

Here, the gripper 10 includes a gripper main body 11 which is directly or indirectly attached to a rotating portion (rotating structure) 3 provided at a distal end of an arm portion (arm) 2 of the workpiece supply robot (bending robot) 1 which is used at least for the bending process for the workpiece W. Further, the gripper 10 includes a suction portion (suction body) 12 which is provided at a distal end of the gripper main body 11 and which sucks the workpiece. The suction portion (suction body) 12 includes a suction surface 12a (see Figure 2 and so forth) which is directed in a direction intersecting with (in the present embodiment, orthogonal to) a rotation axis P1 (see Figure 4 and so forth) of the rotating portion (rotating structure) 3. The suction surface 12a is positioned in a range H (see Figure 2 and Figure 5) of a projected area of a rotation center portion of the rotating portion (rotating structure) 3 in a direction along the rotation axis P1 of the rotating portion (rotating structure) 3. The suction portion (suction body) 12 is configured to be rotatable around an axis P2 (see Figure 5 and so forth), as a center, which is orthogonal to the suction surface 12a.

Note that the workpiece supply robot 1 according to the embodiment may be configured to include a processing machine such as a bending machine (not illustrated and the same applies to the following) and a control device (not illustrated and the same applies to the following) which controls this processing machine and the workpiece supply robot 1 and may be included in a processing system, which performs an automatic process for the workpiece W, together with the processing machine.

### [Detailed Configuration of Workpiece Supply Robot]

The workpiece supply robot 1 is arranged between the workpiece mounting table 9 and a transportation destination (such as a processing machine, for example) of the workpiece W. The workpiece supply robot 1 is configured to hold the workpiece W on the workpiece mounting table 9 and to transport the held workpiece W to a transportation destination such as a processing machine.

Specifically, the workpiece supply robot 1 includes a moving mechanism 60, the gripper 10, and the arm portion 2. Further, the workpiece supply robot 1 includes a control unit (not illustrated) which controls each of those portions. The moving mechanism 60 moves the workpiece supply robot 1. The gripper 10 is configured to be capable of holding the workpiece W. The arm portion 2 moves the gripper 10 close to or apart from the workpiece W.

The moving mechanism 60 includes a rail portion 60a, a base stand 60b, and base stand driving means (not illustrated). The rail portion 60a is laid on a floor surface 8. The base stand 60b is configured to be movable along the rail portion 60a. The base stand driving means drives the base stand 60b. The moving mechanism 60 is configured as a so-called linear motion mechanism, for example. The moving mechanism 60 moves the workpiece supply robot 1 on the floor surface 8 in accordance with control by the control unit based on a control signal from a robot control unit (not illustrated) included in the control device. Note that because various known configurations can be employed for the moving mechanism 60, a detailed description thereof will not be made.

In the arm portion 2, one end portion is coupled with the base stand 60b of the moving mechanism 60, and the rotating portion 3 at the other end (distal end) is coupled with the gripper 10. The arm portion 2 is configured to move the gripper 10 close to or apart from the workpiece W in accordance with the control by the control unit based on a control signal from the robot control unit. In the embodiment, the arm portion 2 is an articulated arm having six control axes.

The arm portion 2 is configured to be capable of executing not only transportation of the workpiece W from the workpiece mounting table 9 but also transportation (carrying in) of the workpiece W to a processing machine or the like, assistance for a process (bending process) for the workpiece W, transportation (carrying out) of a product (a processed part of the bending) from the processing machine or the like, and so forth. Note that because various known configurations can be employed for the workpiece supply robot 1 including the arm portion 2, a detailed description thereof will not be made. Further, the arm portion 2 is not limited to the above-described configuration of the articulated arm having the six control axes, and various known configurations can arbitrarily be employed.

### [Configuration of Gripper]

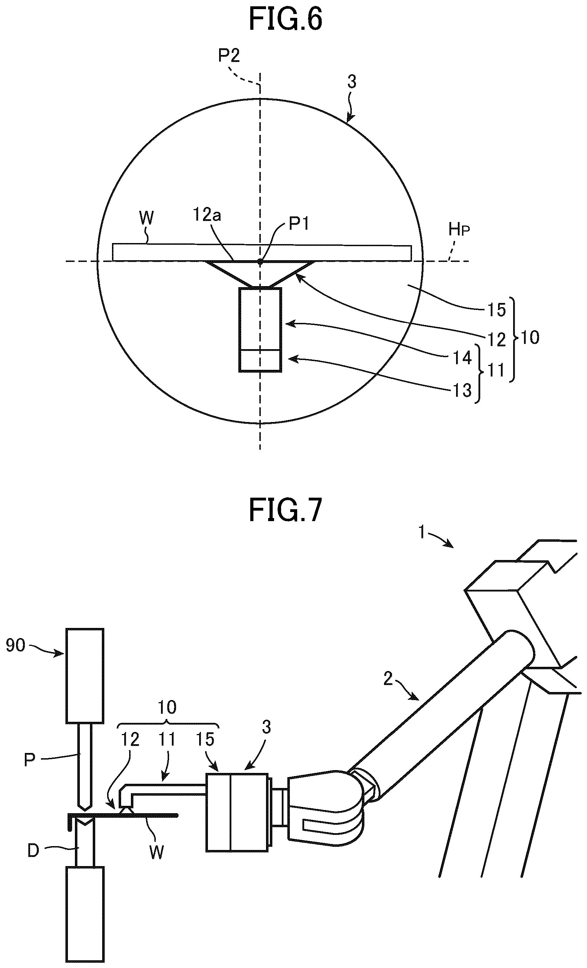

Figure 2 is a side view illustrating the gripper according to the embodiment. Figure 3 is a partially transparent side view of the gripper according to the embodiment. Figure 4 is an outline diagram illustrating one example of a rotating operation of the gripper according to the embodiment. Figure 5 is a front view illustrating a workpiece non-holding state of the gripper according to the embodiment. Figure 6 is a front view illustrating a workpiece holding state of the gripper according to the embodiment.

As illustrated in Figure 2 and Figure 3, the gripper 10 has the gripper main body 11 which is detachably installed in the rotating portion 3 at the distal end of the arm portion 2 via a base member 15, for example, and one suction portion 12 which is attached to the gripper main body 11 and configured to be capable of holding the workpiece W. As illustrated in Figure 4, the gripper 10 (and the base member 15) configured in such a manner is installed to be 360° rotatable around the rotation axis P1 as a rotation center by rotation of the rotating portion 3 in directions indicated by arrows in Figure 4. Further, as illustrated in Figure 5, the suction portion 12 is provided to be 360° rotationally movable around the axis P2 as a rotation center by rotation drive of a rotating mechanism described later.

The gripper main body 11 includes a first shaft portion (first shaft portion) 13 which extends in parallel with an axis direction of the rotation axis P1 of the rotating portion (rotating structure) 3 and a second shaft portion (second shaft portion) 14 which extends in a direction intersecting with an axis direction of the first shaft portion (first shaft portion) 13, for example. The suction portion (suction body) 12 is provided at a distal end of the second shaft portion (second shaft portion) 14. Note that the gripper main body 11 is installed in the rotating portion 3 such that the first shaft portion 13 and the second shaft portion 14 in rod shapes form an L shape, for example, in the side view illustrated in Figure 2. That is, in the present embodiment, the second shaft portion 14, which linearly extends in an axis direction of the axis P2 intersecting with the rotation axis P1 and is shorter than the first shaft portion 13, is provided at a distal end of the long first shaft portion 13, which linearly extends in the axis direction of the rotation axis P1. In such a shape, a distance between the rotating portion 3 and the suction portion 12 can sufficiently be secured, and the workpiece W can be held in a state where its surface is always along the rotation axis P1 of the rotating portion 3.

At a distal end of the second shaft portion 14, the suction portion 12 is connected, via piping, with an air drawing source (not illustrated) which draws air. The piping is arranged in an internal portion or an external portion along the gripper main body 11, for example. The suction portion 12 can be configured with a suction pad, in a flat shape (a trapezoidal shape in a side view), whose upper end portion configures the suction surface 12a which is capable of sucking (capable of contacting with) the surface of the workpiece W. Consequently, the suction portion 12 is configured to suck a surface of the workpiece We at the end from the group of workpieces W which are mounted on the workpiece mounting table 9 in the comb-tooth shape, by air drawing force by the air drawing source through the piping. As described earlier, the suction surface 12a is positioned in the range H of the projected area of the rotation center portion of the rotating portion 3 in the direction along the rotation axis P1 of the rotating portion 3 (see Figure 2 and Figure 5). Here, "the range H of the projected area of the rotation center portion" can be defined as follows. That is, as illustrated in Figure 2, when the rotation axis P1 of the rotating portion 3 is caused to agree with an upper surface U of a die D as a tool in a horizontal direction, a distance in the horizontal direction between a bending line V passing through a vertical direction center of the die D and a front surface 14b of the second shaft portion 14 is set as L2, and a distance obtained by subtracting a margin α from the distance L2 is set as L2 - α. Further, an intersection point between a perpendicular line Vα to the margin α and the upper surface U of the die D is set as an origin, and lines which respectively extend obliquely upward and obliquely downward, on the gripper 10 side, at angles θ with respect to the upper surface U are set as press brake interference lines PL outside which the gripper 10 interferes with a press brake. In addition, when a distance in a radial direction from the range H of the above projected area to an outer side surface 13b of the first shaft portion 13 is set as L3, as for the range H of the projected area, H/2 + L3 < (L2 - α) tanθ holds, and H < |2{(L2 - α) tanθ - L3}| thus holds. Note that the angle θ is 45° in a case where the workpiece W is bent by 90°, for example, and can have a range of 15° to 45°, for example.

Further, the first shaft portion (first shaft portion) 13 of the gripper main body 11 is positioned in an eccentric position deviated from the rotation center portion of the rotating portion (rotating structure) 3. The first shaft portion 13 is positioned on an outer side (eccentric position) of the rotation center portion in a predetermined range, which has the rotation axis P1 as the rotation center, in the radial direction, for example, as illustrated in Figure 4, it becomes thereby possible that a position of the suction surface 12a of the suction portion 12 is not changed from the rotation center (rotation axis P1) when the gripper 10 is rotated by the rotating portion 3.

Specifically, in a state where the gripper 10 does not hold the workpiece W, as illustrated in Figure 5, the gripper main body 11 and the suction portion 12 are placed such that the suction surface 12a of the suction portion 12 is arranged in a position deviated from a plane Hp so as to be positioned slightly above the plane Hp, which is formed to be orthogonal to the axis P2 and along the rotation axis P1. When the gripper 10 sucks and holds the workpiece W from the above state, because the suction portion 12 is slightly deformed due to suction as illustrated in Figure 6, the suction surface 12a of the suction portion 12, a lower surface of the workpiece W, and the plane Hp come to positions at the same plane level as the rotation axis P1. Accordingly, a flat plane position in which the workpiece W held by the gripper 10 overlaps with the rotation axis P1 is not changed due to rotation of the rotating portion 3.

Note that the gripper 10 according to the present embodiment further includes the base member 15 which couples the gripper main body 11 with the rotating portion (rotating structure) 3 as described above. Furthermore, the gripper main body 11 and the base member 15 incorporate a rotating mechanism 16 which rotates the suction portion (suction body) 12. The base member 15 is provided between the gripper main body 11 and the rotating portion 3, the gripper main body 11 can thereby indirectly be attached to the rotating portion 3, and it becomes possible to increase variations of attachment. Note that it is also possible to attach the gripper main body 11 directly to the rotating portion 3 without using the base member 15.

As illustrated in Figure 3, the rotating mechanism 16, which is incorporated in the gripper main body 11 and the base member 15, includes a rotating shaft 12b, a rack portion 13a, a pinion portion 14a, and a drive section 15a. The drive section 15a is configured with an electric cylinder which is provided in internal portions of the base member 15 and the first shaft portion 13, for example. Alternatively, instead of the rack portion 13a, an electric motor or the like which is capable of belt drive or the like can be employed for the drive section 15a. The rack portion 13a is provided on an distal end side of the drive section 15a which is housed in the internal portions of the base member 15 and the first shaft portion 13. The pinion portion 14a is provided on one end side of the rotating shaft 12b housed in an internal portion of the second shaft portion 14 and meshes with the rack portion 13a. Note that the suction portion 12 is attached to another end side of the rotating shaft 12b.

In the rotating mechanism 16 configured in such a manner, when the rack portion 13a is moved by the drive section 15a in the direction along the rotation axis P1, because the rotating shaft 12b moves rotationally around the axis P2 together with the pinion portion 14a, the suction portion 12 can be rotated freely in 360°, for example, in the plane Hp. Note that because the rotating mechanism 16 is incorporated in the gripper main body 11 and the base member 15, quality of an external appearance is not impaired.

Note that the first shaft portion (first shaft portion) 13 of the gripper main body 11 has such a length that in a state where the suction portion (suction body) 12 sucks the workpiece W, the workpiece W does not interfere with the base member 15 when the suction portion (suction body) 12 rotates. That is, in a case where it is assumed that the suction portion 12 sucks a center portion of the workpiece W with a maximum length of L, as illustrated in Figure 2, a length L1 of the first shaft portion 13 is set to a length longer than L/2. Here, the maximum length L of the workpiece W denotes a linear distance in a portion, in which the linear distance from one point on an outer edge of the workpiece W to another point opposed to the above point becomes a maximum, and means a length of a diagonal in a case where the workpiece W is rectangular, for example.

On the other hand, if the suction portion 12 sucks an end portion of the workpiece W with the maximum length L, the length L1 of the first shaft portion 13 is set to a length longer than L ([L/2, L] < L1). More specifically, the length L1 of the first shaft portion 13 is set to approximately 5 cm, for example. The length L1 of the first shaft portion 13 is set in such a manner, and because interference with the base member 15 thereby does not occur even when the workpiece W is rotated by the suction portion 12 in any direction, trouble in the bending process due to interference can be prevented.

### [Operation of Bending Process by Workpiece Supply Robot]

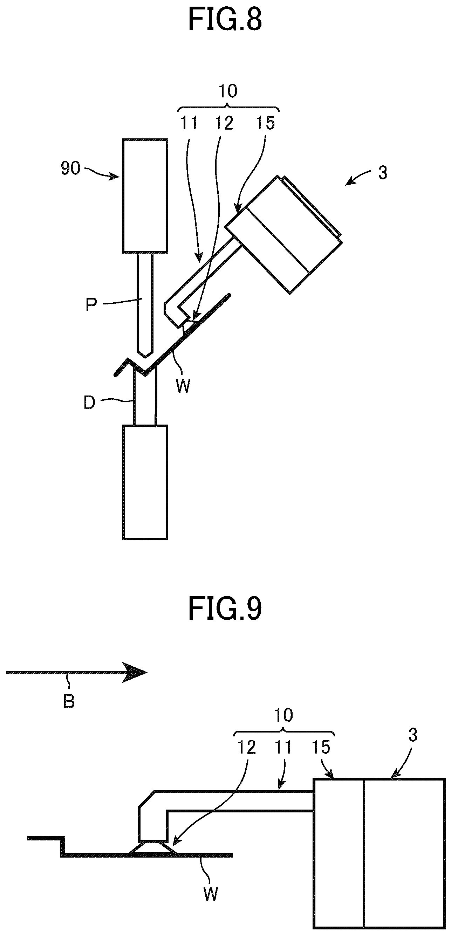

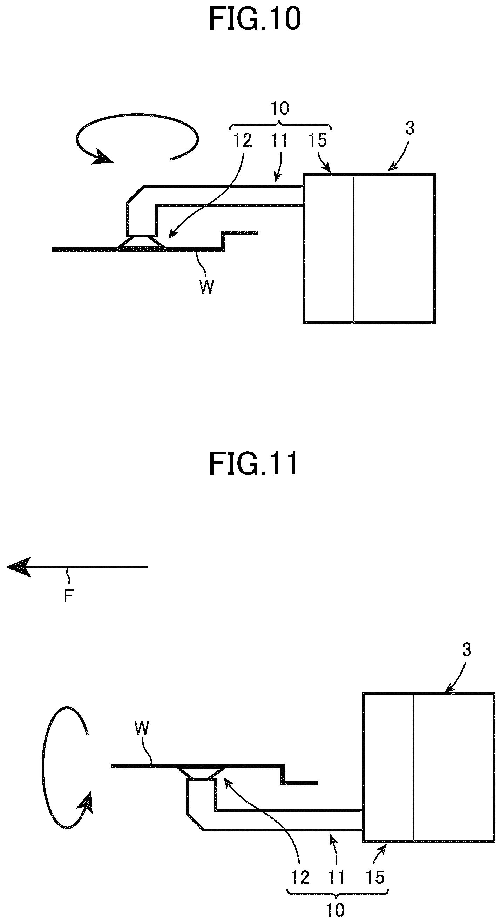

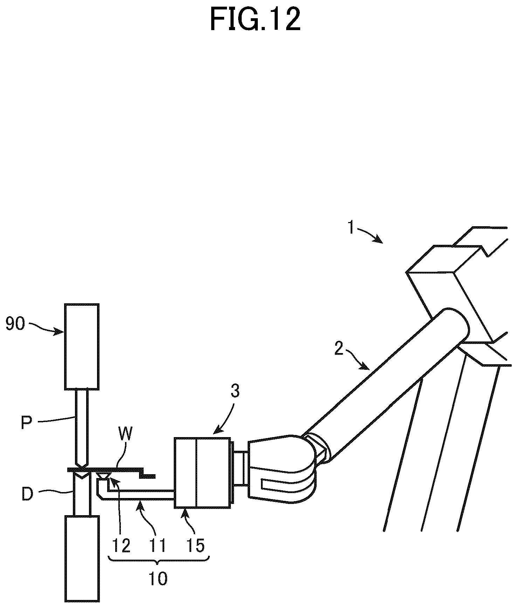

Figure 7 is an outline diagram illustrating an operation of the bending process by the workpiece supply robot having the gripper according to the embodiment. Figure 8 is an outline diagram illustrating the operation of the bending process by the workpiece supply robot having the gripper according to the embodiment. Figure 9 is a side view illustrating an operation in the bending process by the gripper according to the embodiment. Figure 10 is a side view illustrating the operation in the bending process by the gripper according to the embodiment. Figure 11 is a side view illustrating the operation in the bending process by the gripper according to the embodiment. Figure 12 is an outline diagram illustrating an operation of the bending process by the workpiece supply robot having the gripper according to the embodiment.

In the operation of the bending process for the workpiece W by the workpiece supply robot 1, in a state where the workpiece W is held by suction by the above gripper 10, the workpiece W is rotated by rotating the suction portion (suction body) 12 of the gripper 10, and a direction of the workpiece W is thereby changed.

First, as illustrated in Figure 1, the workpiece supply robot 1 changes its orientation such that the suction surface 12a of the suction portion 12 of the gripper 10 is set in a lateral direction. Then, the workpiece We at the end of the group of the workpieces W is held by suction by the gripper 10. Subsequently, the workpiece W held by suction is transported to (carried into or carried out from) the press brake. Note that the workpiece W is an object to be machined, which is a so-called small article having comparatively small dimensions, for example.

For example, as illustrated in Figure 7, in the workpiece supply robot 1 according to the embodiment, in a state where the gripper 10 sucks and holds the workpiece W and in a front orientation in which the axis direction of the rotation axis P1 of the rotating portion 3 becomes a direction which is almost directly opposed to the press brake 90, the workpiece W can be caused to approach the press brake 90. Thus, it becomes possible to carry out the bending process by moving the gripper 10 sufficiently close to a punch P and the die D of the press brake 90.

For example, in a case where one side of the workpiece W, which is first bent by the press brake 90, is successively bent in a reverse bending direction, from a lower-side approach orientation in which the gripper 10 is positioned below the workpiece W, the base member 15, the gripper main body 11, and the suction portion 12 are together rotated 180° around the rotation axis P1 as the rotation center by rotation of the rotating portion 3. Accordingly, the bending direction of the one side, which is first bent, of the workpiece W is switched from an upward direction to a downward direction, and an upper-side approach orientation as illustrated in Figure 7 is set in which the gripper 10 is positioned above the workpiece W. From this state, the one side, which is first bent, of the workpiece W held by suction by the gripper 10 is inserted between the punch P and the die D, while the front orientation is maintained, is caused to abut a back gauge (not illustrated) of the press brake 90, and is thereby positioned.

Subsequently, as illustrated in Figure 8, following is performed in which when a second bending process is carried out, the arm portion 2 is moved obliquely upward toward the press brake 90 in accordance with a trajectory of following by the workpiece supply robot 1 in each phase of bending order and is caused to follow springing of the workpiece W. Accordingly, the one side, which is first bent, of the workpiece W can successively be folded in a crank shape. After the one side which is first bent is folded in the crank shape, as illustrated in Figure 9, the gripper 10 is returned to the front orientation, and the workpiece W and the gripper 10 are then retracted in a direction to move apart from the press brake 90, which is indicated by an arrow B in Figure 9. Note that the gripper 10 may be returned to the front orientation after folding is performed and the workpiece W and the gripper 10 are retracted, without an orientation change, in the direction to move apart from the press brake 90, which is indicated by the arrow B in Figure 9. Furthermore, for example, in a case where one side on an opposite side to the one side, which is first bent, of the workpiece W is bent in a reverse direction to a bending direction of second bending (crank-shaped folded portion), as illustrated in Figure 10, the suction portion 12 is 180° rotated as indicated by an arrow in Figure 10 by the rotating mechanism 16 such that the one side on the opposite side of the workpiece W is directed toward the press brake 90 side.

In addition, as illustrated in Figure 11, from the upper-side approach orientation in which the gripper 10 is positioned above the workpiece W, the gripper main body 11 and the suction portion 12 are, together with the base member 15, are rotated 180° around the rotation axis P1 as the rotation center, as indicated by an arrow in Figure 11, by rotation of the rotating portion 3. Accordingly, the lower-side approach orientation is set in which it is possible to set the bending direction of the one side on the opposite side to the one side, which is first bent, of the workpiece W to a reverse direction and the gripper 10 is positioned below the workpiece W. From this state, the workpiece W and the gripper 10 are pushed out in a direction to move close to the press brake 90, which is indicated by an arrow F in Figure 11. In such a manner, as illustrated in Figure 12, the one side on the opposite side of the workpiece W held by suction by the gripper 10 is inserted between the punch P and the die D, while the front orientation is maintained, is caused to abut the back gauge (not illustrated) of the press brake 90, and is thereby positioned. Then, the following is performed in which when a third bending process is carried out, the arm portion 2 is moved obliquely upward toward the press brake 90 in accordance with the trajectory of the following by the workpiece supply robot 1 in each phase of bending order and is caused to follow springing of the workpiece W.

As described above, because the workpiece supply robot 1 having the gripper 10 according to the embodiment does not need a re-gripping operation of the workpiece W and does not need an operation for changing an orientation of the distal end side of the arm portion 2, the bending process in a next step can be carried out without a long interruption in a processing time of the bending process, the processing time can thus be shortened, and productivity can significantly be improved.

### [Effects of Workpiece Supply Robot Having Gripper According to the Embodiment]

As described above, the gripper 10 according to the embodiment is different from a form in which the suction portion 12 is directly provided on the rotating portion 3 at the distal end of the arm portion 2 and includes the gripper main body 11 which extends from the rotating portion 3 in the axis direction of the rotation axis P1, and the suction portion 12 is provided on the distal end side of the gripper main body 11. Further, the suction surface 12a of the suction portion 12 is directed in a direction intersecting with the rotation axis P1 of the rotating portion 3. Thus, because it is possible to provide a long distance between the rotating portion 3 and the suction portion 12 and the gripper 10 can be caused to approach the press brake 90 in the front orientation, the distal end of the arm portion 2 does not interfere with the press brake 90 or the like, and the bending process can certainly be carried out even for a small workpiece W.

Further, because the gripper 10 according to the embodiment has a structure in which the gripper 10 can rotate 360° around the rotation axis P1 of the rotating portion 3 as the rotation center in a vertical plane and the suction portion 12 can rotate 360° around the axis P2 as the rotation center in a horizontal plane, the direction of the workpiece W can freely be changed, and the bending process can thereby be carried out for all sides without performing the above orientation changing operation or re-gripping operation.

### [Modifications]

In the above, a description is made about a preferable embodiment of the present invention, but the technical scope of the present invention is not limited to the scope of the descriptions of the embodiment. Various changes or improvements can be applied to the above-described embodiment.

For example, in the above-described embodiment, a description is made about a case where the suction surface 12a of the suction portion 12 agrees with the rotation axis P1 of the rotating portion 3, but this is not restrictive. For example, the suction surface 12a may be oblique with respect to the rotation axis P1 in a certain range. Further, the suction surface 12a may be in a position apart from the rotation axis P1 as long as the suction surface 12a is in the range H of the projected area of the rotation center portion of the rotating portion 3. Consequently, positions of the first shaft portion 13 and the second shaft portion 14 of the gripper main body 11 are not limited to those described above as long as arrangement in eccentric positions is performed in which the suction surface 12a of the suction portion 12 is provided in the range H of the above projected area.

In the above-described embodiment, a description is made about a case where in the gripper main body 11, the first shaft portion 13 and the second shaft portion 14 have linear shapes and are formed into the L shape in the side view, but this is not restrictive. For example, a portion corresponding to the first shaft portion 13 may be bent in a crank shape or may be folded into a shape having protrusions and recesses so as to configure fourth, fifth, ..., and nth shaft portions in such a manner that the above portion does not interfere with a folded portion of the workpiece W. In this case, the second shaft portion 14 may be provided not only at the distal end of the first shaft portion 13 but also at a distal end of the nth shaft portion.

Further, in the above-described embodiment, a description is made about a case where the rotating mechanism 16 is incorporated in the base member 15 and the gripper main body 11, but this is not restrictive. The rotating mechanism 16 may be provided in external portions of the base member 15 and the gripper main body 11. Further, a length of the gripper main body 11 in the direction along the rotation axis P1 (the length L1 of the first shaft portion 13) and a length in the direction along the axis P2 (a length of the second shaft portion 14) are not limited to those described above as long as the lengths are such lengths that the workpiece W held by suction by the suction portion 12 does not interfere with the base member 15 (the rotating portion 3 in a case where no base member 15 is provided) due to rotation of the suction portion 12.

In the foregoing, the embodiment of the present invention is described, but this embodiment is presented as an example and is not intended to limit the scope of the invention. This novel embodiment can be carried out in various other forms, and various omissions, substitutions, and changes can be made without departing from the gist of the invention. The embodiment and modifications thereof are included in the scope and gist of the invention and are also included in the scope of the invention recited in the claims and their equivalents.

### Reference Signs List

- 1: workpiece supply robot
- 2: arm portion
- 3: rotating portion
- 8: floor surface
- 9: workpiece mounting table
- 10: gripper
- 11: gripper main body
- 12: suction portion
- 12a: suction surface
- 12b: rotating shaft
- 13: first shaft portion
- 13a: rack portion
- 14: second shaft portion
- 14a: pinion portion
- 15: base member
- 15a: drive section
- 16: rotating mechanism
- 90: press brake

## Claims

1. A gripper comprising:
a gripper main body configured to be directly or indirectly attached to a rotating structure provided at a distal end of an arm of a bending robot which is used at least for a bending process for a workpiece; and
a suction body configured to be provided at a distal end of the gripper main body and to suck the workpiece, wherein
the suction body includes a suction surface configured to be directed in a direction intersecting with a rotation axis of the rotating structure,
the suction surface is positioned in a range of a projected area of a rotation center portion of the rotating structure in a direction along the rotation axis of the rotating structure, and
the suction body is configured to be rotatable around an axis as a center, the axis being orthogonal to the suction surface.

2. The gripper according to claim 1, wherein
the gripper main body includes a first shaft portion configured to extend in parallel with an axis direction of the rotation axis of the rotating structure and a second shaft portion configured to extend in a direction intersecting with an axis direction of the first shaft portion, and
the suction body is provided at a distal end of the second shaft portion.

3. The gripper according to claim 2, wherein
the first shaft portion is positioned in an eccentric position deviated from the rotation center portion of the rotating structure.

4. The gripper according to any one of claims 1 to 3, further comprising
a base member configured to couple the gripper main body with the rotating structure, wherein
the gripper main body and the base member incorporate a rotating mechanism configured to rotate the suction body.

5. The gripper according to claim 4, wherein
the first shaft portion has such a length that in a state where the suction body suck the workpiece, the workpiece does not interfere with the base member when the suction body rotates.

6. A workpiece holding method comprising
changing a direction of the workpiece by rotating the workpiece by rotating the suction body of the gripper in a state where the workpiece is held by suction by the gripper according to any one of claims 1 to 3.
